# EUROPÄISCHE PATENTSCHRIFT

(11) **EP 2 338 188 B1**
(45) Veröffentlichungstag und Bekanntmachung des Hinweises auf die Patenterteilung: **01.05.2013**
(21) Anmeldenummer: 09740284.6
(22) Anmeldetag: 30.09.2009
(51) Int. Cl.: H01M 2/10, H01M 10/04

(54) **ENERGIESPEICHERMODUL**
ENERGY ACCUMULATOR MODULE
MODULE DE STOCKAGE D'ÉNERGIE

(30) Priorität: 30.09.2008 US 101507 P; 18.09.2009 WO PCT/EP2009/062151; 18.09.2009 WO PCT/EP2009/062153; 18.09.2009 WO PCT/EP2009/062152
(43) Veröffentlichungstag der Anmeldung: 29.06.2011
(73) Patentinhaber: MAGNA STEYR Battery Systems GmbH & Co OG, 8041 Graz (AT)
(72) Erfinder: MICHELITSCH, Martin, A-8041 Graz (AT); WÜNSCHE, Ralph, A-8041 Graz (AT); GEIDL, Uwe, A-8041 Graz (AT); NIEDERL, Dietmar, A-8041 Graz (AT)
(74) Vertreter: Rausch, Gabriele
(86) Internationale Anmeldenummer: PCT/EP2009/062720
(87) Internationale Veröffentlichungsnummer: WO 2010/037798

(56) Entgegenhaltungen:
- EP-A1- 1 139 483
- EP-A2- 1 523 051
- WO-A1-99/05747

## Beschreibung

Die vorliegende Erfindung betrifft ein Energiespeichermodul, das mehrere in einem Stapel angeordnete Flachzellen aufweist.

Derartige Energiespeichermodule finden in einer Vielzahl von Vorrichtungen, insbesondere in Kraftfahrzeugen Anwendung. Sie lassen sich kombinieren, um eine aus mehreren Modulen bestehende Energiespeichereinheit mit den jeweils geforderten Leistungsmerkmalen zu schaffen.

Problematisch ist dabei häufig, dass der Anschluss der einzelnen Module, d. h. deren zweckmäßige Verbindung miteinander, relativ aufwendig gelöst ist und dass in der Regel zusätzliche Verbindungsbauteile erforderlich sind. Dies erschwert auch die Montage der entsprechenden Energiespeichereinheit.

In der EP 1 139 483 A1 ist ein Energiespeichermodul offenbart, das mehrere in einem Stapel angeordnete Flachzellen aufweist. Außerdem sind Anschlusseinrichtungen vorgesehen, die derart ausgebildet sind, dass das Energiespeichermodul mechanisch, elektrisch und/ oder zum Austausch von Kühlmittel mit zumindest einem weiteren gleichartigen Energiespeichermodul verbindbar ist. Die miteinander verbundenen Flachzellen sind in einem Gehäuse untergebracht.

Es ist die Aufgabe der vorliegenden Erfindung, ein Energiespeichermodul zu schaffen, das kompakt ist und das sich auf einfache Weise montieren lässt. Außerdem soll das Energiespeichermodul zuverlässig und effizient sein.

Diese Aufgabe wird durch ein Energiespeichermodul mit den Merkmalen des Anspruchs 1 gelöst.

Das erfindungsgemäße Energiespeichermodul weist Anschlusseinrichtungen auf, die derart ausgebildet sind, dass das Energiespeichermodul mechanisch, elektrisch und/ oder zum Austausch von Kühlmittel mit zumindest einem weiteren gleichartigen Energiespeichermodul verbindbar ist. Mit anderen Worten weist das erfindungsgemäße Energiespeichermodul bereits die Komponenten auf, die für eine Verbindung mit benachbarten Modulen gleicher Art benötigt werden. Die jeweiligen Anschlusseinrichtungen müssen nur noch montiert werden, um die Energiespeichermodule funktionell miteinander zu koppeln. Somit bilden mehrere der Energiespeichermodule ein flexibles Baukastensystem, um unter Verwendung gleichartiger Module Energiespeichereinheiten in unterschiedlichen Konfigurationen zusammensetzen zu können. Der Flachzellenstapel wird mittels zumindest eines elastischen Elements zusammengehalten.

Vorteilhafte Ausführungsformen der Erfindung sind in den Unteransprüchen, der Beschreibung und den beigefügten Zeichnungen angegeben.

Vorzugsweise weist das Energiespeichermodul zur Kühlung der Flachzellen Kühlelemente auf, die zwischen den Flachzellen angeordnet sind und die insbesondere plattenförmig sind. Durch die zwischen den Flachzellen angeordneten Kühlelemente ist eine effiziente Kühlung der Flachzellen möglich, so dass auch bei einem stets mit Abwärme verbundenen Betrieb des Energiespeichermoduls ein Temperaturbereich eingehalten werden kann, der eine effiziente Nutzung des Energiespeichermoduls ermöglicht.

Gemäß einer vorteilhaften Ausführungsform weist das Energiespeichermodul an einer ersten Seite eine erste mechanische, elektrische und/ oder Kühlmittel-Anschlusseinrichtung auf, wobei das Energiespeichermodul an einer der zur ersten Seite gegenüberliegenden zweiten Seite eine zweite mechanische, elektrische bzw. Kühlmittel-Anschlusseinrichtung aufweist.

Die erste Anschlusseinrichtung und die zweite Anschlusseinrichtung sind bei dieser Ausführungsform lagesymmetrisch zueinander angeordnet und formkomplementär zueinander ausgebildet. Die Anschlusseinrichtungen der ersten Seite sind somit derart ausgebildet, dass sie die Anschlusseinrichtungen der zweiten Seite ergänzen, und umgekehrt. Die Anschlusseinrichtungen sind räumlich gesehen relativ zueinander so angeordnet, dass eine Verbindung ohne weiteres, insbesondere ohne zusätzliche Bauteile möglich ist. Die Ausgestaltung der Anschlusseinrichtungen ist dabei komplementär, d. h. sie sind aufeinander abgestimmt und kompatibel, um eine einfache Verbindung zwischen den Modulen zu ermöglichen. Unter einer Verbindung ist beispielsweise eine mechanische Verbindung zu verstehen, die zwei benachbarte Energiespeichermodule zu einer mechanischen Einheit kombiniert. Unter einer elektrischen Verbindung ist beispielsweise zu verstehen, dass zwei benachbarte Energiespeichermodule elektrisch miteinander sind, um einer Einheit aus den beiden Energiespeichermodulen Energie zuführen oder Energie aus ihr abführen zu können.

Der Austausch von Kühlmittel zwischen benachbarten Energiespeichermodulen vereinfacht ein Kühlmittelsystem einer Einheit aus mehreren Energiespeichermodulen, da nicht jedes Energiespeichermodul unabhängig von den anderen Modulen mit Kühlmittel versorgt werden muss. Vielmehr bilden - letztlich wie auch bei der mechanischen Verbindung und der elektrischen Verbindung - mehrere Module zusammen ein System.

Um ein Kühlmittelsystem zu schaffen, verfügt die beschriebene Ausführungsform des Energiespeichermoduls über Kühlmittel-Anschlusseinrichtungen, die mit entsprechenden Anschlusseinrichtungen gleichartiger Module kompatibel sind.

Der Flachzellenstapel wird bevorzugt durch eine Fixierungsanordnung zusammengehalten werden, die zwei Druckplatten aufweist, die gegenüberliegenden Stirnseiten des Flachzellenstapels zugeordnet sind und die mittels zumindest des einen eines elastischen Elements miteinander verbunden sind. Durch das Zusammenwirken der Druckplatten und des elastischen Elements werden die Flachzellen mit einem mechanischen Druck beaufschlagt. Dieser Druck erhöht die Stabilität des Stapels und wirkt sich positiv auf die Lebensdauer und Leistungsfähigkeit der einzelnen Flachzellen aus, solange er bestimmte Grenzen nicht überschreitet. Außerdem wird durch den mechanischen Druck eine thermische Kopplung zwischen den Flachzellen und den genannten Kühlelementen verbessert, wodurch die Abwärme der Flachzellen effizienter abgeführt werden kann.

Zur Herstellung einer mechanischen Verbindung zwischen zwei benachbarten Energiespeichermodulen können die Druckplatten jeweils zumindest einen Befestigungsflansch aufweisen, mit dem das Energiespeichermodul an einem benachbarten, gleichartigen Energiespeichermodul befestigbar ist, insbesondere an einer der Druckplatten des benachbarten, gleichartigen Energiespeichermoduls.

Ein gleichmäßig auf den Flachzellenstapel wirkender Druck kann erzeugt werden, wenn zumindest ein erstes elastisches Element sich entlang einer ersten Längsseite des Flachzellenstapels zwischen den zwei Druckplatten erstreckt und zumindest ein zweites elastisches Element sich entlang einer zweiten Längsseite des Flachzellenstapels zwischen den Druckplatten erstreckt.

Das erste elastische Element und das zweite elastische Element sind vorzugsweise lagekomplementär zueinander angeordnet, insbesondere auf unterschiedlicher Höhe, um zwei gleichartige Energiespeichermodule auf kompakte Weise miteinander verbinden zu können.

Zur Befestigung der elastischen Elemente können die Druckplatten an zwei gegenüberliegenden Seiten angeordnete Befestigungssegmente aufweisen, die in der Ebene der jeweiligen Druckplatte über die Druckplatten und über den Flachzellenstapel hinaus ragen. Die Befestigungssegmente sind dabei ebenfalls lagekomplementär zueinander angeordnet.

Wenn zumindest ein Teil der Anschlusseinrichtungen Steckverbindungen sind, die insbesondere lösbar sind, kann eine Montage bzw. ein Verbinden von zwei Energiespeichermodulen durch ein einfaches Einstecken erfolgen, was die Montage beschleunigt und die Montagekosten senkt. Durch das Vorsehen einer lösbaren Verbindung kann beispielsweise ein schadhaftes Modul, das einen Bestandteil einer größeren Energiespeichereinheit bildet, auf einfache Weise ausgetauscht werden.

Es kann vorgesehen sein, dass das Energiespeichermodul eine Verbindungseinheit aufweist, die die Flachzellen zumindest elektrisch miteinander verbindet und die insbesondere als Platte ausgebildet ist, die sich in einer Ebene senkrecht zu der jeweiligen Erstreckungsebene der Flachzellen erstreckt. Die Verbindungseinheit bildet somit ein Kontaktierungselement zur seriellen oder parallelen elektrischen Verschaltung der Flachzellen. Die Flachzellen können auch in einer Mischform aus paralleler und serieller Verschaltung miteinander verbunden werden. Die Verbindungseinheit kann zusätzlich mechanisch stabilisierend wirken.

Bevorzugt sind an der Verbindungseinheit elektrische Anschlusseinrichtungen angeordnet, die als Stecker bzw. Buchse ausgebildet sind.

Es kann vorgesehen sein, dass das Energiespeichermodul zumindest einen Kühlmittelkanal aufweist, der an einer ersten Seite des Energiespeichermoduls in einen Kühlmitteleinlass mündet und an einer zweiten Seite des Energiespeichermoduls in einen Kühlmittelauslass mündet. Der Kühlmittelkanal kann senkrecht oder parallel zu den Flachzellen verlaufen. Um größere Kühlleistungen bereitstellen zu können, ist auch denkbar, mehr als eine Kühlleitung vorzusehen.

Die Erfindung betrifft weiterhin eine Energiespeichereinheit mit zumindest zwei Energiespeichermodulen gemäß zumindest einer der vorstehend beschriebenen Ausführungsformen.

Die Energiespeichermodule können in einer zweidimensionalen oder dreidimensionalen Matrix angeordnet sein, um den zur Verfügung stehenden Bauraum optimal auszunutzen. Insbesondere bei den Ausführungsformen der Energiespeichereinheit in einer mehrdimensionalen Anordnung - d.h. insbesondere wenn nicht lediglich eine reinen Reihenanordnung von Modulen vorliegt - kann zumindest eine Adaptereinrichtung vorgesehen sein, um zumindest zwei Energiespeichermodule miteinander zu verbinden. Beispielsweise können so zwei Energiespeichermodule, die Endglieder jeweils einer Energiespeichermodul-Reihe bilden, miteinander verbunden werden.

Die Flachzellenstapel von in einer Reihe angeordneter und miteinander funktionell gekoppelter Energiespeichermodule können hintereinander oder nebeneinander angeordnet sein. Denkbar ist auch, dass eine Energiespeichereinheit mit mehreren Energiespeichermodulen beide Varianten aufweist, wenn dies erforderlich sein sollte.

Bei Ausführungsformen der Energiespeichereinheit mit zumindest zwei Energiespeichermodulen, die jeweils eine Fixierungsanordnung mit zwei Druckplatten umfassen, können die benachbarten Druckplatten der beiden Energiespeichermodule mechanisch miteinander gekoppelt sein, insbesondere über entsprechende Befestigungsflansche der Druckplatten. Nach einer besonderen Ausführungsform der Erfindung ist diese nicht nur zur Anwendung bei Lithium-Ionen-Akkumulatoren/ Zellen geeignet, sondern kann auch für/bei andere/n Energiespeicher, beispielsweise NiMH (Nickel-Metallhydrid) -Energiespeicher/Zellen und/ oder KondensatorSpeicherzellen, insbesondere Doppelschicht-Kondensator-Zellen (Supercaps) verwendet werden.

Nachfolgend wird die vorliegende Erfindung rein beispielhaft anhand vorteilhafter Ausführungsformen unter Bezugnahme auf die beigefügten Zeichnungen beschrieben. Es zeigen:
- Fig. 1: eine erste Ausführungsform eines Energiespeichermoduls in einer Perspektivansicht,
- Fig. 2: das Energiespeichermodul der Fig. 1 in einer ersten Seitenansicht,
- Fig. 3: das Energiespeichermodul der Fig. 1 in einer Ansicht von unten,
- Fig. 4: eine Detailansicht der Fig. 3,
- Fig. 5: das Energiespeichermodul der Fig. 1 in einer zweiten Seitenansicht,
- Fig. 6: zwei Energiespeichermodule gemäß Fig. 1 in nicht gekoppeltem Zustand in einer Perspektivansicht,
- Fig. 7: zwei Energiespeichermodule gemäß Fig. 1 in gekoppeltem Zustand in einer Perspektivansicht,
- Fig. 8: zwei Energiespeichermodule gemäß Fig. 1 in gekoppeltem Zustand in einer Ansicht von oben,
- Fig. 9: zwei Energiespeichermodule gemäß Fig. 1 in gekoppeltem Zustand in einer Seitenansicht,
- Fig. 10: eine zweite Ausführungsform eines Energiespeichermoduls in einer Perspektivansicht,
- Fig. 11: zwei Energiespeichermodule gemäß Fig. 10 in ungekoppeltem Zustand in einer Perspektivansicht,
- Fig. 12: zwei Energiespeichermodule gemäß Fig. 10 in gekoppeltem Zustand in einer Perspektivansicht,
- Fig. 13: zwei Energiespeichermodule gemäß Fig. 10 in ungekoppeltem Zustand in einer Ansicht von oben,
- Fig. 14: zwei Energiespeichermodule gemäß Fig. 10 in gekoppeltem Zustand in einer Ansicht von unten,
- Fig. 15: zwei Energiespeichermodule gemäß Fig. 10 in gekoppeltem Zustand in einer Seitenansicht,
- Fig. 16: eine dritte Ausführungsform eines Energiespeichermoduls in einer Perspektivansicht,
- Fig. 17: eine Seitenansicht des Energiespeichermoduls der Fig. 16.

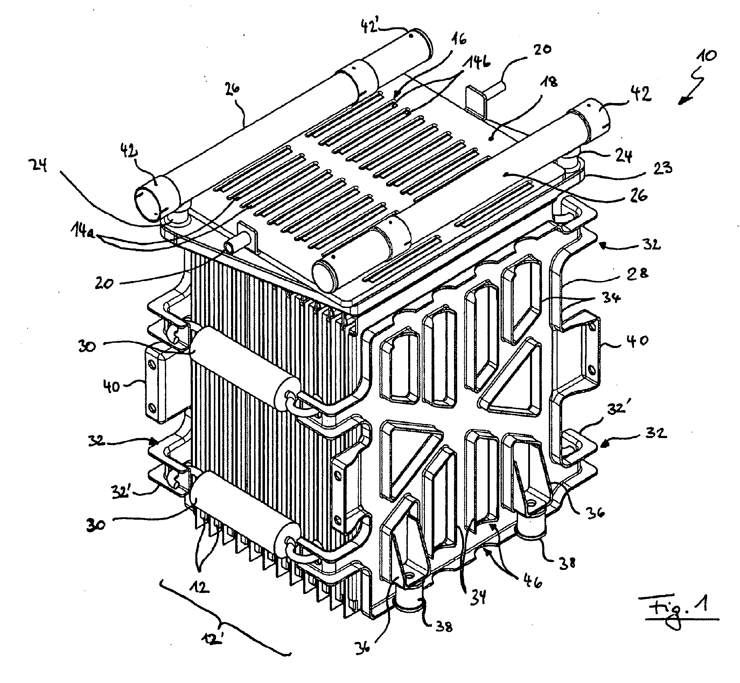

Fig. 1 zeigt eine Perspektivansicht eines Energiespeichermoduls 10, das eine Mehrzahl von prismatischen Zellen/Flachzellen 12 umfasst, die in einem Zellenstapel 12' parallel zueinander angeordnet sind. Die Flachzellen 12 können beispielsweise Lithium-Ionen-Akkumulator-Zellen oder Doppelschicht-Kondensator-Zellen ("Supercap") sein. Die einzelnen Zellen 12 weisen jeweils zwei Elektrodenlaschen 14a, 14b auf, die durch dafür vorgesehene Schlitze 16 einer Verbindungsplatine 18 gesteckt sind. Die Elektrodenlaschen 14a, 14b durchgreifen die Verbindungsplatine 18 und sind an deren freien Oberseite - d.h. an der den Flachzellen 12 abgewandten Seite der Verbindungsplatine 18 - mit nicht gezeigten Kontaktflächen verbunden, um die Flachzellen 12 elektrisch miteinander zu kontaktieren. Die Kontaktierung der Flachzellen 12 kann beispielsweise parallel oder seriell sein oder eine Mischform aus paralleler und serieller Kontaktierung umfassen.

Die in den Flachzellen 12 gespeicherte elektrische Energie kann über einen Stecker und eine entsprechende Buchse abgegriffen werden, die nachfolgend summarisch lediglich als Stecker 20 bezeichnet werden. Die Stecker 20 sind an einander gegenüberliegenden Seiten der Verbindungsplatine 18 angeordnet. In ähnlicher Weise können Stecker/Buchsen für Datenleitungen vorgesehen sein, die allerdings nicht gezeigt sind. Die Datenleitungen können beispielsweise zur Übertragung von Temperaturinformationen des Energiespeichermoduls 10 und/ oder von Informationen bezüglich des Spannungszustands der Flachzellen 12 dienen.

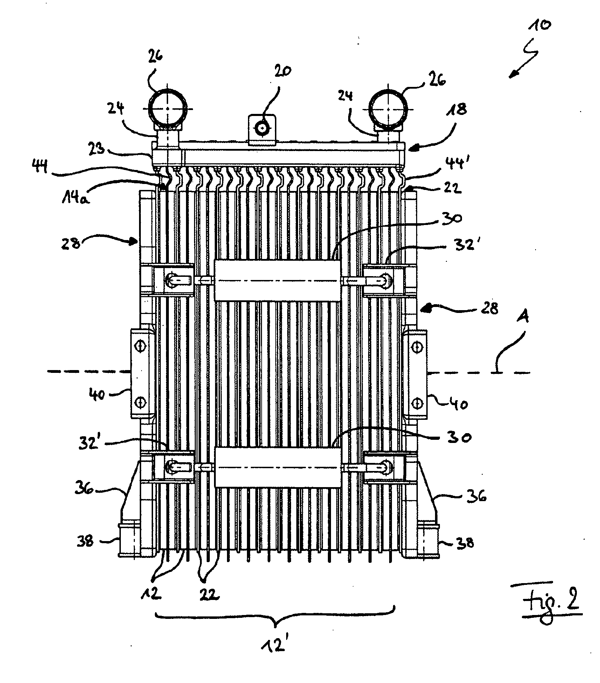

Zwischen benachbarten Flachzellen 12 sind flächig ausgebildete, plattenartige Kühlelemente 22 angeordnet (siehe Fig. 2), um die bei Betrieb des Energiespeichermoduls 10 vor allem in den Flachzellen 12 entstehende Abwärme effizient ableiten zu können. Zur besseren Stabilisierung des Stapels 12' und zur Verbesserung der thermischen Kopplung können die Flachzellen 12 und die Kühlelemente 22 miteinander verklebt sein.

Die Kühlelemente 22 sind wärmeleitend mit einem Kühlkörper 23 verbunden, der in die Verbindungsplatine 18 integriert oder an dieser befestigt ist. Der Kühlkörper 23 steht über Anschlussstutzen 24 mit Kühlmittelleitungen 26 in Verbindung. Beispielsweise ist eine der Kühlmittelleitungen 26 eine Zufuhrleitung für Kühlmittel, während die andere Kühlmittelleitung 26 eine Abfuhrleitung ist. Das dem Kühlkörper 23 zugeführte Kühlmittel kann durch in dem Kühlkörper 23 in geeigneter Weise ausgebildete Kanäle geleitet werden, um einerseits eine flächige Kühlung der Verbindungsplatine 18 zu bewirken, die sich aufgrund der Leitung von elektrischem Strom erwärmt, und um andererseits die von den Kühlelementen 22 aufgenommene Abwärme der Flachzellen 12 abzuführen.

Der Kühlkörper 23 weist nicht gezeigte schlitzartige Öffnungen auf, durch die sich die Elektrodenlaschen 14a, 14b der Flachzellen 12 erstrecken, um an die freie Oberfläche der Verbindungsplatine 18 geführt werden zu können.

Um den Flachzellenstapel 12' zusammenzuhalten, sind zwei Druckplatten 28 vorgesehen, die die beiden Stirnflächen des Flachzellenstapels 12' begrenzen. Die beiden Druckplatten 28 sind nicht fest miteinander verbunden, da bei Betrieb des Energiespeichermoduls 10 aufgrund von thermischen Effekten und/oder alters- sowie ladungszustandsbedingten Abmessungs-/Dickeänderungen der Flachzellen 12 die Dicke des Stapels 12' variiert. Die beiden Druckplatten 28 stehen daher über Zugfedern 30 miteinander in Verbindung. Die elastischen Eigenschaften der Zugfedern 30 sind derart ausgelegt, dass einerseits ein hinreichend guter Zusammenhalt des Flachzellenstapels 12' gewährleistet ist, andererseits aber auch die vorstehend beschriebenen, nicht zu vermeidenden Abmessungsänderungen in einem akzeptablen Umfang gestattet werden.

Zur Befestigung der Zugfedern 30 an den Druckplatten 28 sind Befestigungswinkel 32 vorgesehen, die seitlich über den Flachzellenstapel 12' hinausragen und jeweils einen Abschnitt 32' aufweisen, der sich in einer Richtung senkrecht zu den durch die Flachzellen 12 gebildeten Ebenen erstreckt. Die Abschnitte 32' verlaufen somit parallel versetzt zu einer Stapelachse A (siehe Fig. 2), die durch das Zentrum des Flachzellenstapels 12' senkrecht zu den durch die Flachzellen 12 gebildeten Ebenen verläuft.

An den Abschnitten 32' sind geeignete Vorrichtungen vorhanden, um die Zugfedern 30 zu befestigen. Gezeigt sind Öffnungen/Löcher, in die Haken der Zugfeder 30 eingreifen. Es versteht sich, dass an dieser Stelle beliebige Befestigungsmöglichkeiten zum Einsatz gelangen können. Außerdem können die Zugfedern 30 durch beliebige andere geeignete elastische Elemente ersetzt werden. Auch die Anzahl der Zugfedern 30/elastischen Elemente ist beliebig und kann an die jeweils vorliegenden Bedingungen angepasst werden. Letztlich ist wesentlich, dass ein geeigneter mechanischer Druck auf die Flachzellen 12 ausgeübt wird, um den Stapel 12' zu stabilisieren. Außerdem wird durch eine maßvolle Druckbeaufschlagung eine Erhöhung der Leistungsfähigkeit und der Lebensdauer der Flachzellen 12 bewirkt. Die erzeugte Druckverteilung sollte zudem hinreichend homogen sein, um übermäßige, einseitige Belastungen der Zellen 12 zu vermeiden. Aus diesem Grund sind auch - wie nachfolgend noch beschrieben wird - an beiden Seitenflächen des Stapels 12' Zugfedern 30 vorgesehen. Eine einseitige Anordnung eines elastischen Elements, dem ein schanierartiger Abschnitt auf der anderen Seite gegenübersteht, ist alternativ jedoch grundsätzlich möglich.

Zur Versteifung weisen die Druckplatten 28 Rippen 34 auf, wodurch bei - verglichen mit massiven Platten - gleicher Stabilität Material- und Gewichtsersparnisse erzielt werden. An der Druckplatte 28 sind zudem Montagewinkel 36 vorgesehen, die zur Abstützung des Energiespeichermoduls 10 in seiner Einbaulage vorgesehen sind. Die Einbaulage entspricht in der Regel der gezeigten Lage, d.h. die Verbindungsplatine 18 ist oben angeordnet. In bestimmten Fällen kann die Einbaulage auch anders definiert sein. Dies erfordert dann eine entsprechend veränderte Anordnung der Montagewinkel 36.

Die Montagewinkel 36 sind jeweils mit einem Dämpfungselement 38 versehen, das in der Einbaulage des Energiespeichermoduls 10 eine Übertragung von Schwingungen einer Auflagefläche, auf der sich das Energiespeichermodul 10 abstützt, auf das Energiespeichermodul 10 dämpft. Vorzugsweise sind die Dämpfungselemente 38 zumindest teilweise aus Gummi, Kunststoff und/oder anderen geeigneten elastischen Materialien gefertigt. In einem montierten Zustand des Energiespeichermoduls 10 liegt dessen Gewicht somit auf den Dämpfungselementen 38 bzw. den Montagewinkeln 36 auf. Dabei ist es bei entsprechender Wahl der elastischen Eigenschaften der Dämpfungselemente 38 ausreichend, wenn die Dämpfungselemente 38 nur geringfügig nach unten über die Druckplatten 28 hinausragen (in Fig. 2 kaum zu sehen). Alternativ oder zusätzlich können die Montagepunkte der Auflagefläche/Montagefläche, mit der die Energiespeichereinheit 10 in einem montierten Zustand in Kontakt steht, punktuell in Bereich der ihnen zugeordneten Dämpfungselemente 38 erhöht sein. Die Druckplatten 28 haben somit nicht nur die Funktion, den Stapel 12' zusammenzuhalten, sondern fungieren auch als Strukturelemente, die über die Montagewinkel 36 und die Dämpfungselemente 38 das gesamte Energiespeichermodul 10 tragen.

Wie den Fig. 1 und 2 zu entnehmen ist, dienen die Dämpfungselemente 38 hauptsächlich einer Dämpfung von Schwingungen der Auflagefläche/Montagefläche in einer vertikalen Richtung. Dies bedeutet allerdings nicht, dass seitliche Schwingungen nicht gedämpft werden.

Da die Energiespeichereinheit 10 nur über die Dämpfungselemente 38 mit der Auflagefläche/Montagefläche in Kontakt steht, wird eine elektrische Entkopplung der Energiespeichereinheit 10 und der Auflagefläche/Montagefläche auf einfache Weise dadurch erreicht, dass die Dämpfungselemente 38 zumindest teilweise aus elektrisch isolierendem Material gefertigt sind.

Um eine sichere und zuverlässige Montage des Energiespeichermoduls 10 zu ermöglichen, sind die Druckplatten 28 an zwei gegenüberliegenden Seiten mit über den Zellenstapel 12' hinaus ragenden Befestigungsflanschen 40 versehen. Diese ermöglichen eine zusätzliche Befestigung des Energiespeichermoduls 10 an einem weiteren tragenden Bauteil und/oder einem benachbarten Energiespeichermodul 10, wie nachfolgend noch beschrieben wird.

Das Energiespeichermodul 10 weist eine Reihe von Anschlusseinrichtungen auf, die der mechanischen Verbindung des Energiespeichermoduls 10 mit seiner Umgebung, der elektrischen Kontaktierung sowie der Versorgung mit Kühlmittel dienen. Die mechanischen Anschlusseinrichtungen umfassen - wie bereits ausgeführt - die Befestigungsflansche 40 sowie die Montagewinkel 36 und die ihnen zugeordneten Dämpfungselemente 38. Die elektrische Verbindung wird durch die Stecker 20 ermöglicht. Ein Anschluss an ein Kühlmittelsystem erfolgt über Kühlmittelanschlüsse 42, 42' der Kühlmittelleitungen 26.

Die Kühlmittelanschlüsse 42' sind dabei derart ausgebildet, dass sie in entsprechende Kühlmittelanschlüsse 42 eines benachbarten Energiespeichermoduls 10 eingesteckt werden können (und umgekehrt), um Verbindungen zwischen den Kühlmittelleitungen 26 herzustellen.

Die Kühlmittelanschlüsse 42, 42', die Befestigungsflansche 40 und die Stecker 20 sind räumlich so angeordnet, dass ein Anschluss eines zumindest hinsichtlich der Anschlüsse 42, 42', 20 gleichartigen Energiespeichermoduls 10 an zwei gegenüberliegenden Seitenflächen des Zellenstapels 12' möglich ist. Die Kühlmittelleitungen 26 verlaufen daher senkrecht zu der Stapelachse A in einer Ebene, die parallel versetzt zu der Verbindungsplatine 18 angeordnet ist.

Fig. 2 zeigt eine Ansicht der linken Seite des Energiespeichermoduls 10 der Fig. 1, wodurch der Aufbau des aus alternierend angeordneten Flachzellen 12 und Kühlelementen 22 zusammengesetzten Stapels 12' deutlich zu erkennen ist. Die Elektrodenlaschen 14a, 14b und die der Verbindungsplatine 18 zugewandten Enden der Kühlelemente 22 weisen Sicken 44 bzw. 44' auf, die zur Aufnahme der bereits beschriebenen Relativbewegungen der einzelnen Komponenten bei Betrieb des Energiespeichermoduls 10 vorgesehen sind. Die Sicken 44, 44' nehmen zudem Fertigungstoleranzen der verwendeten Komponenten auf.

Weiterhin ist in Fig. 2 zu erkennen, dass die Montagewinkel 36 der Druckplatten 28 sich seitlich aus der jeweiligen Ebene der entsprechenden Druckplatte 28 erheben.

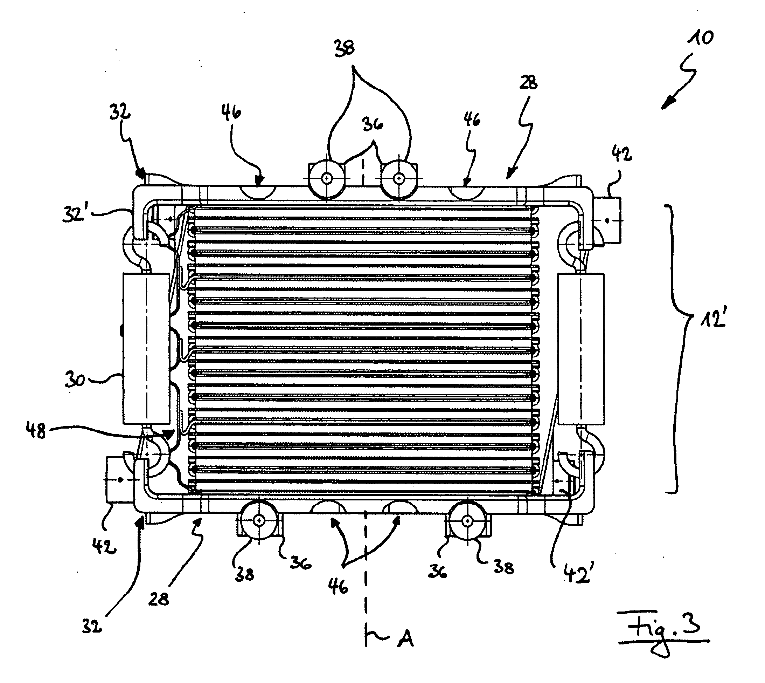

Fig. 3 zeigt das Energiespeichermodul 10 der Fig. 1 in einer Ansicht von unten. Diese Ansicht verdeutlicht die Positionierung der Montagewinkel 36 bzw. der Dämpfungselemente 38. Diese Komponenten sind jeweils an der Außenseite der entsprechenden Druckplatte 28 angeordnet, allerdings sind sie in Bezug auf die Stapelachse A an unterschiedlichen Stellen positioniert. Die Montagewinkel 36/Dämpfungselemente 38 der unteren Druckplatte 28 sind weiter außen - und damit weiter von der Stapelachse A entfernt - angeordnet als die Montagewinkel 36/Dämpfungselemente 38 der oberen Druckplatte 28. Im Gegenzug sind an den entsprechenden (komplementären) Stellen der jeweils gegenüberliegenden Druckplatte 28 Ausnehmungen 46 vorgesehen, die zur Aufnahme von Dämpfungselementen 38 benachbarter Energiespeicherzellen 10 ausgebildet sind. Wie in Fig. 1 zu sehen ist, sind die Ausnehmungen 46 nicht nur in dem Rand der Druckplatten 28 vorgesehen, sondern auch in einem Teil der Rippen 34.

Im Zusammenhang mit Fig. 3 ist weiterhin darauf hinzuweisen, dass die Kühlmittelanschlüsse 42 seitlich nicht nur über den Zellenstapel 12' sondern auch über die Befestigungswinkel 32 der Druckplatten 28 hinausragen, um einen Anschluss der Kühlmittelleitungen 26 zu vereinfachen.

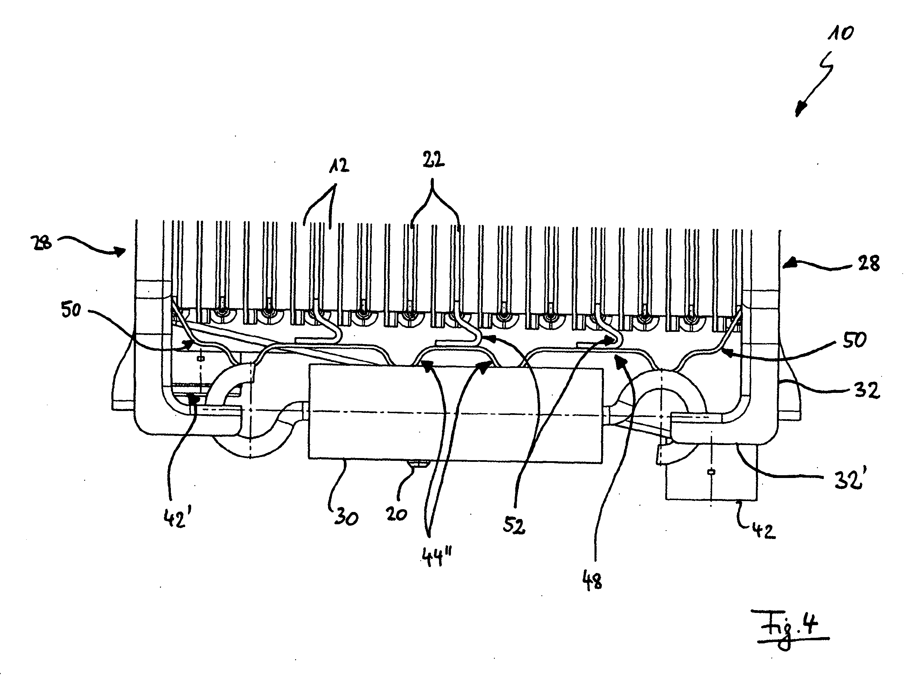

Die in Fig. 3 linke Seite des Flachzellenstapels 12 wird durch ein Schottblech 48 geschützt, das sich zwischen den Druckplatten 28 erstreckt. Die Ausgestaltung des Schottblechs 48 ist der Fig. 4 deutlicher zu entnehmen, die eine Detailansicht der Fig. 3 zeigt.

Das Schottblech 48 weist Sicken 44" und Abwinklungen 50 auf, die dem Schottblech 48 einerseits Stabilität verleihen. Andererseits bekommt das Schottblech 48 dadurch auch elastische Eigenschaften, die Relativbewegungen der Druckplatten 28 zulassen. Grundsätzlich ist es möglich, das Schottblech 48 so auszugestalten, dass auf die Zugfedern 30 verzichtet werden kann. Das Schottblech 48 weist dann entsprechende rückfedernde Eigenschaften auf, die die Druckplatten 28 zusammenhalten. In diesem Fall ist eine geeignet dimensionierte und entsprechend ausgelegte Befestigung des Schottblechs 48 an den Druckplatten 28 zu gewährleisten. Abweichend zu der dargestellten Ausführungsform, bei der nur auf der linken Seite des Stapels 12' ein Schottblech 48 vorliegt, kann an beiden freien Seiten des Zellenstapels 12' ein Schottblech 48 vorgesehen sein. Dies empfiehlt sich insbesondere, wenn das Schottblech 48 als elastisches Element anstelle der Zugfedern 30 vorgesehen ist.

Das Schottblech 48 hat unter anderem die zusätzliche Aufgabe, als eine Art Schott - insbesondere im Brandfall - eine schützende Wirkung zwischen benachbarten Energiespeichermodulen 10 zu entfalten. Daher ist es grundsätzlich ausreichend, dass zur Erfüllung dieser Aufgabe je Energiespeichermodul 10 lediglich auf einer Seite ein Schottblech 48 vorhanden ist.

Das Schottblech 48 erhöht auch die mechanische Stabilität des Zellenstapels 12', indem es durch Winkelabschnitte 52 mit einigen der Kühlelemente 22 verbunden ist. Die dadurch in ihrer seitlichen Bewegungsfreiheit eingeschränkten Kühlelemente 22 stabilisieren den Zellenstapel 12'. Eine vollständige Unterdrückung von Relativbewegungen zwischen dem Schottblech 48 und den jeweiligen, mit einem Winkelabschnitt 52 versehenen Kühlelementen 22 ist nicht vorgesehen. Die Winkelabschnitte 52 sind daher keine einfachen Winkel, sondern weisen eher einen S-förmigen Charakter auf, um in einem gewissen Maß seitliche Bewegungen der Flachzellen 12 aufgrund von Dickevariationen des Zellenstapels 12' zu gestatten. Durch die beschriebene Ausgestaltung einzelner Kühlelemente 22 in Zusammenwirken mit dem Schottblech 48 wird somit der auf die einzelnen Flachzellen 12 wirkende mechanische Druck beeinflusst. Der auf die Zellen 12 wirkende Druck kann wiederum - wie bereits erwähnt - deren Lebensdauer und Effizienz positiv beeinflussen.

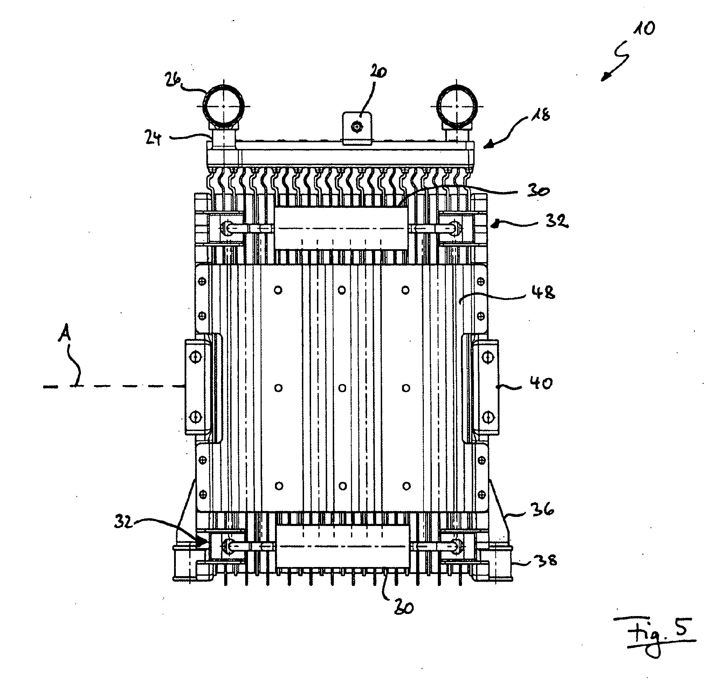

Fig. 5 zeigt das Energiespeichermodul 10 in einer weiteren Seitenansicht. Die gezeigte Seite liegt der in Fig. 2 gezeigten Seite des Flachzellenstapels 12' gegenüber. Die Seitenansicht der Fig. 5 verdeutlicht, dass das Schottblech 48 nicht die gesamte Seitenfläche des Zellenstapels 12' abdeckt. Im unteren und oberen Bereich erstrecken sich die Zugfedern 30, weshalb hier auf eine Verblendung des Zellenstapels 12 verzichtet wurde.

Es wird darauf hingewiesen, dass die Zugfedern 30 - und folglich auch die Befestigungswinkel 32 bzw. die entsprechenden Abschnitte 32' - weiter oben bzw. weiter unten, d.h. näher an der Verbindungsplatine 18 (in Einbaulage in der Regel oben) bzw. näher an den Dämpfungselementen 38 (in Einbaulage in der Regel unten), angeordnet sind als auf der gegenüberliegenden Seite (vergleiche Fig. 2). Diese komplementäre Ausgestaltung ermöglicht eine platzsparende Verbindung von zwei Energiespeichermodulen 10.

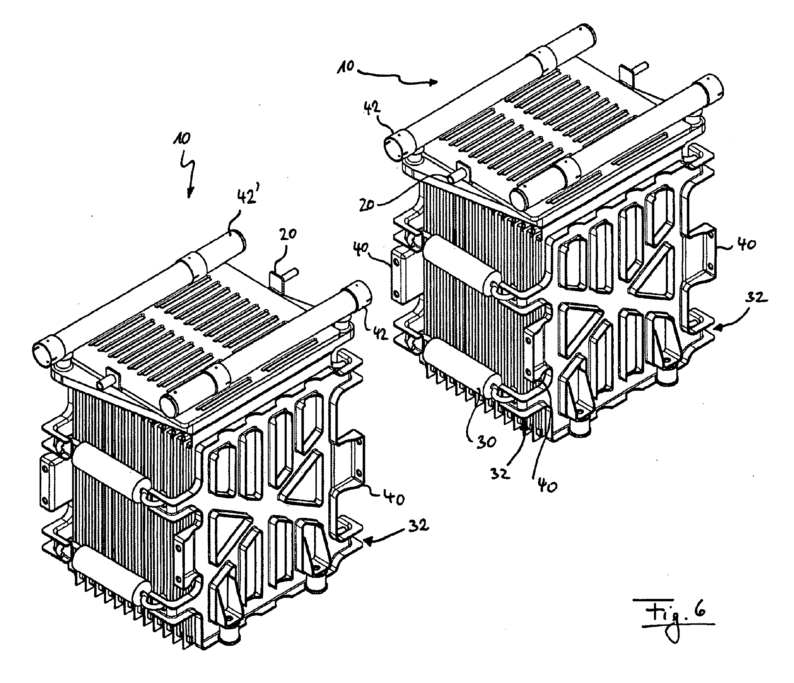

Fig. 6 verdeutlicht, wie zwei gleichartige Energiespeichermodule 10 zu einer Energiespeichereinheit kombiniert werden können. Dazu werden - wie gezeigt - zunächst zwei Energiespeichermodule 10 derart nebeneinander angeordnet, dass die in Fig. 2 gezeigte Seite des rechten Energiespeichermoduls 10 der in Fig. 5 gezeigten Seite des linken Energiespeichermoduls 10 zugewandt ist. Die entsprechenden Seiten der beiden Energiespeichermodule 10 sind komplementär, d.h. sie ergänzen sich/sind aufeinander abgestimmt. Die beiden Energiespeichermodule 10 müssen nun lediglich aufeinander zu bewegt werden, bis die Kühlmittelanschlüsse 42, 42' mit dem jeweils komplementären Kühlmittelanschluss 42' bzw. 42 des benachbarten Energiespeichermoduls 10 verbunden sind. Da die Zugfedern 30 an den einander zugewandten Seiten der beiden Energiespeichermodule 10 in komplementären Positionen - d.h. auf verschiedenen Höhen - angeordnet sind, können die Module 10 nahe aneinander angenähert werden. Die Befestigungsflansche 40 der beiden Energiespeichermodule 10 befinden sich dahingegen auf gleicher Höhe, so dass eine mechanische Verbindung der jeweils in einer Ebene liegenden Druckplatten 28 der benachbarten Module 10 möglich ist. Durch das Annähern der beiden Module 10 treten auch die einander gegenüberliegenden und formkomplementären Stecker 20 der benachbarten Module 10 miteinander in Kontakt, so dass auch eine elektrische Kontaktierung der beiden Module 10 gewährleistet ist.

Bei der dargestellten Ausführungsform der Energiespeichermodule 10 sind die Kühlmittelanschlüsse 42, 42' derart ausgestaltet, dass eine fluiddichte Verbindung hergestellt wird, ohne dass weitere Bauteile und/oder Montageschritte notwendig sind. Gleiches gilt für die elektrische Kontaktierung über die Stecker 20. Lediglich die Befestigungsflansche 40 müssen mit Schrauben oder ähnlichen Befestigungsmitteln miteinander verbunden werden. Es versteht sich, dass die Befestigungsflansche 40 - wie auch die Kühlmittelanschlüsse 42, 42' und die Stecker 20 - Steckverbindungen aufweisen können. Umgekehrt können für eine zusätzliche Sicherung der Verbindungen 42, 42', 20 beispielsweise Schraubverbindungen und/oder ergänzenden Verbindungsbauteile vorgesehen sein.

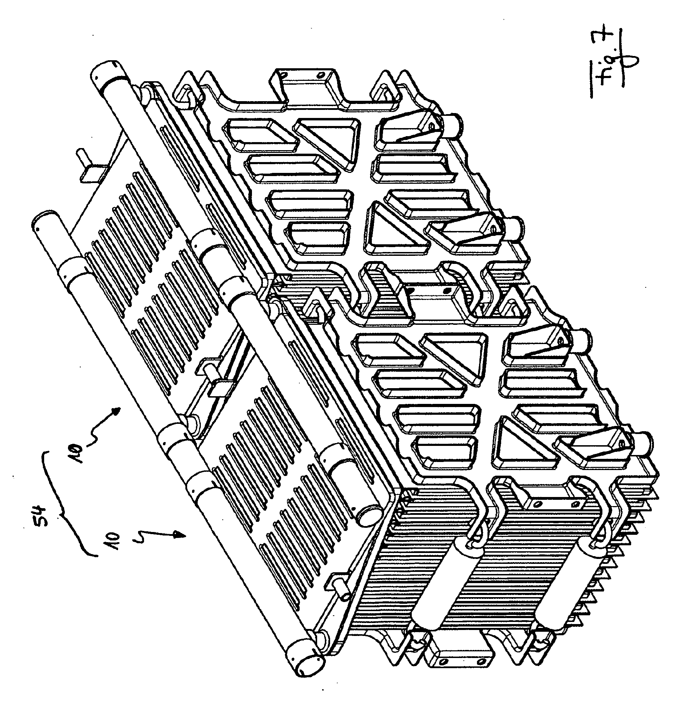

Fig. 7 zeigt zwei miteinander verbundene Energiespeichermodule 10, die nun eine Energiespeichereinheit 54 bilden. Die Montage ist - mit Ausnahme der Befestigung der Befestigungsflansche 40 - abgeschlossen. Die komplementäre Anordnung der Zugfedern 30 ermöglicht eine kompakte Bauweise der Energiespeichereinheit 54. Die Energiespeichereinheit 54 weist zwei nebeneinander liegende Zellenstapel 12' auf, d.h. die Stapelachsen A der beiden Stapel 12' sind parallel versetzt zueinander angeordnet.

Die lage- und formkomplementäre Ausbildung der Stecker 20 und der Kühlmittelanschlüsse 42, 42' gewährleistet eine sichere und zuverlässige Verbindung der Energiespeichermodule 10 zu der Energiespeichereinheit 54. Es versteht sich, dass eine beliebige Anzahl von Energiespeichermodulen 10 kombiniert werden kann, um eine den jeweils vorliegenden Anforderungen gerecht werdende Energiespeichereinheiten 54 bereitstellen zu können. Dabei müssen die einzelnen Energiespeichermodule 10 jedoch nicht zwangsläufig nur in einer Reihe angeordnet sein (eindimensionale Anordnung), da durch geeignete Adapterstücke auch eine Verbindung von mehreren, insbesondere parallelen Reihen möglich ist. Eine mehrreihige Energiespeichereinheit 54 weist dann eine zweidimensionale Erstreckung (2D-Matrix) auf. Ein Adapterstück am Ende einer Reihe von Energiespeichermodulen 10 kann beispielsweise Rohrstücke mit einer 180°-Krümmung für die Kühlmittelleitungen 26 aufweisen. Außerdem kann das Adapterstück eine elektrische Leitung zum Verbinden des letzten Steckers 20 einer Reihe von Energiespeichermodulen 10 mit dem ersten Stecker 20 der benachbarten Reihe umfassen.

Auch eine dreidimensionale Anordnung von Energiespeichermodulen 10 kann auf einfache Weise realisiert werden (3D-Matrix), um beispielsweise einen zur Verfügung stehenden Bauraum möglichst effizient mit Energiespeichermodulen 10 zu füllen. Entsprechende Adapterstücke für Kühlmittelverbindungen und elektrische Verbindungen zwischen den verschiedenen Ebenen sind in diesem Fall erforderlich.

Je nach Ausgestaltung und Anzahl der zu verbindenden Energiespeichermodule 10 über mehrere Ebenen können auch zusätzliche Abstandshalter oder Trägersegmente vorgesehen sein, um die Energiespeichereinheit 54 zu stabilisieren.

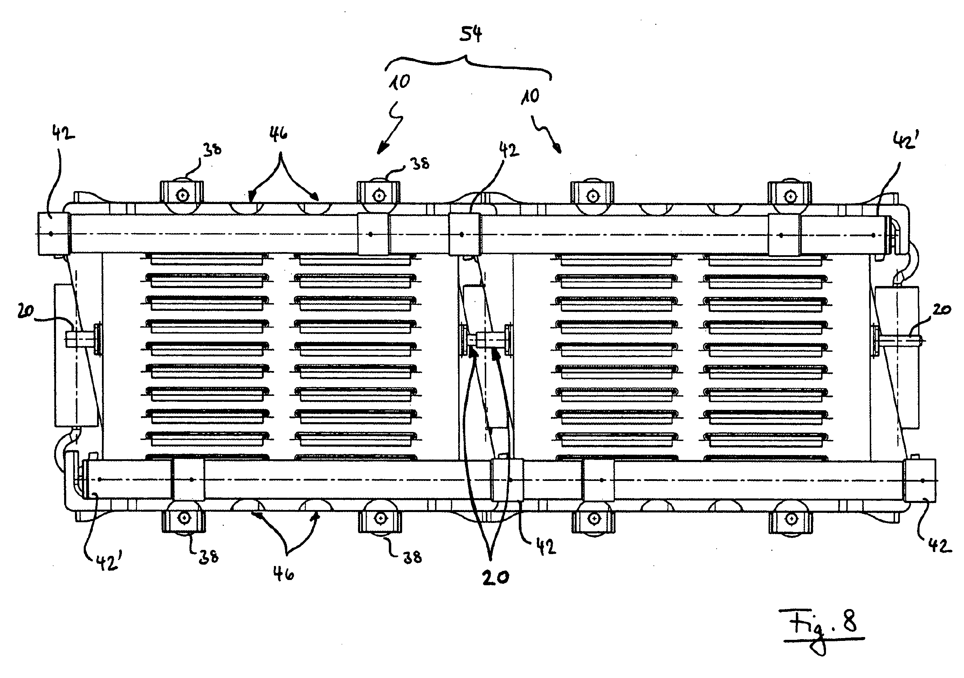

Fig. 8 zeigt eine Ansicht der Energiespeichereinheit 54 der Fig. 7 von oben. Da bei dieser speziellen Ausgestaltung der Energiespeichereinheit 54 keine nebeneinander liegenden Reihen von Energiespeichermodulen 10 vorgesehen sind, liegen die Dämpfungselemente 38 der einzelnen Energiespeichermodule 10 in Fig. 8 oben und unten jeweils auf gleicher Höhe. Identisch ausgebildete Energiespeichermodule 10 könnten dann nur mit einem gewissen Abstand/Versatz von den gezeigten Energiespeichermodulen 10 angeordnet werden. Das genannte Problem tritt nicht auf, wenn die Dämpfungselemente 38 in der in Fig. 3 dargestellten Konfiguration angeordnet sind. Alternativ könnte auch vorgesehen sein, dass die Dämpfungselemente 38 von benachbarten Reihen von Energiespeichermodulen 10 an beiden Seiten Dämpfungselemente 38 aufweisen, die näher beieinander angeordnet sind, so dass sie in die in dem mittleren Bereich der jeweiligen Druckplatten 28 angeordneten Ausnehmungen 46 der gezeigten Module 10 eingeführt werden können.

Fig. 8 zeigt weiterhin die lage- und formkomplementäre Ausbildung der Stecker 20. Es ist zu sehen, dass der rechte Stecker 20 des linken Energiespeichermoduls 10 in den linken Stecker 10 des rechten Moduls 10 eingeschoben/eingesteckt ist, um eine zuverlässige elektrische Kontaktierung zu gewährleisten. Eine entsprechende komplementäre Ausgestaltung weisen die Kühlmittelanschlüsse 42, 42' aus. Der Kühlmittelanschluss 42 ist etwas länger als der Kühlmittelanschluss 42' und ragt seitlich über die entsprechende Verbindungsplatine 18 hinaus. Dadurch kann er zumindest teilweise auf den Kühlmittelanschluss 42' des benachbarten Energiespeichermoduls 10 aufgeschoben werden.

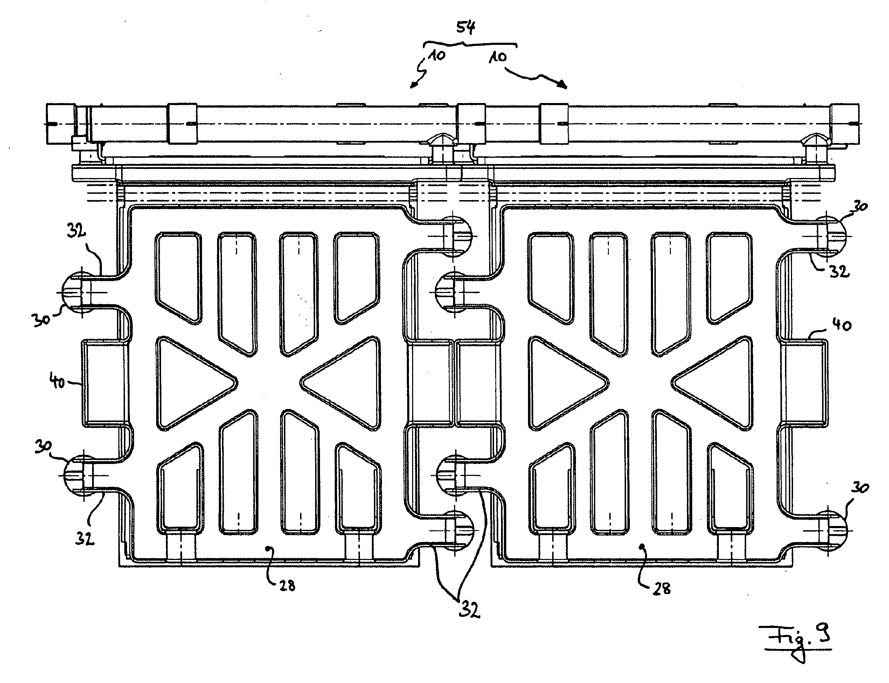

Fig. 9 zeigt eine Seitenansicht der Energiespeichereinheit 54, um die lagekomplementäre Ausgestaltung der Befestigungswinkel 32 zu veranschaulichen. An der linken Seite der jeweiligen Druckplatte 28 sind die Befestigungswinkel 32, an denen die in dieser Darstellung nicht sichtbaren Abschnitte 32' als Befestigungspunkte für die Zugfedern 30 angeordnet sind, in räumlicher Nähe zu dem Befestigungsflansch 40 ausgebildet. Der linke Befestigungsflansch 40 befindet sich in etwa auf mittlerer Höhe der Druckplatte 28. Auf der rechten Seite der jeweiligen Druckplatte 28 ist ein weiterer Befestigungsflansch 40 vorgesehen, der zur Verbindung mit dem linken Befestigungsflansch 40 der benachbarten Druckplatte 28 ebenfalls auf mittlerer Höhe angeordnet ist. Die rechten Befestigungswinkel 32 befinden sich im Bereich des oberen bzw. des unteren Randes der Druckplatte 28, so dass die linken Befestigungswinkel 32 der benachbarten Druckplatte 28 in einen Raum zwischen den rechten Befestigungswinkeln 32 und dem rechten Befestigungsflansch 40 eingreifen können.

Die Zugfedern 30 der benachbarten Energiespeichermodule 10 liegen in montiertem Zustand der Energiespeichereinheit 54 im Wesentlichen in einer vertikalen Ebene, die durch die seitlichen Kontaktflächen der Befestigungsflansche 40 der benachbarten Druckplatten 28 definiert ist und in der auch die Abschnitte 32' liegen.

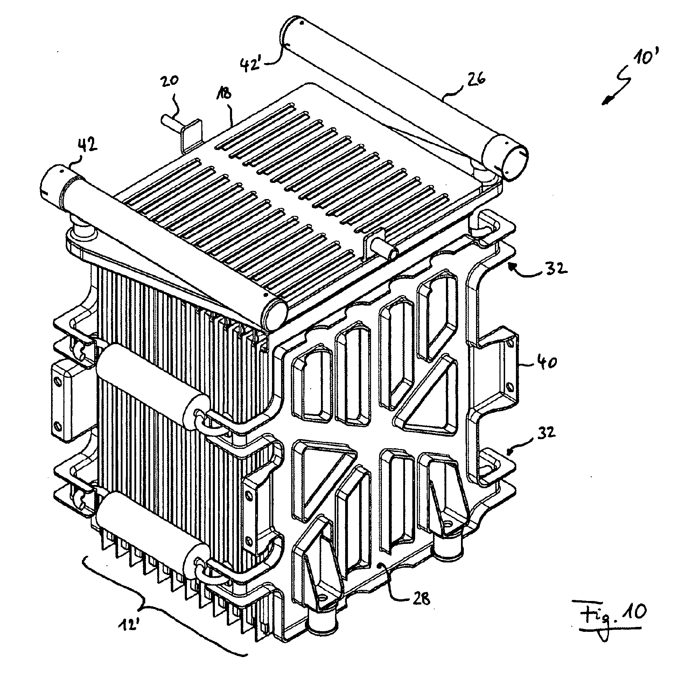

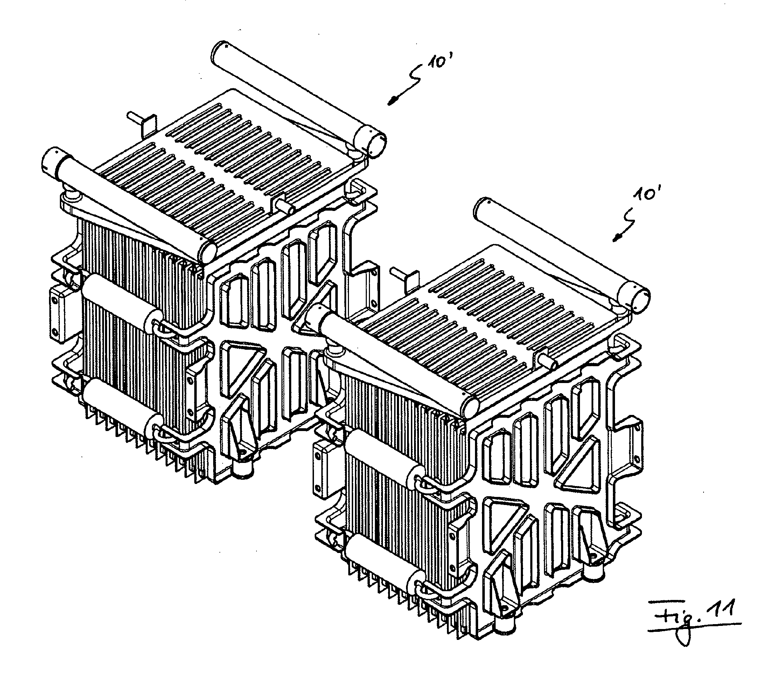

Fig. 10 zeigt eine weitere Ausführungsform 10' des Energiespeichermoduls. Das Energiespeichermodul 10' unterscheidet sich von dem Energiespeichermodul 10 unter anderem dadurch, dass die Kühlmittelleitungen 26 nicht parallel zu den Flachzellen 12 bzw. den Kühlelementen 22 oder den Druckplatten 28 verlaufen, sondern senkrecht dazu. Sie erstrecken sich somit parallel zu den Zugfedern 30. Auch die Stecker 20 sind nicht an einer Seite der Verbindungsplatine 18 angeordnet, die einer Seitenfläche des Flachzellenstapels 12' entspricht, sondern sie ragen an den Seiten über die Verbindungsplatine 18 hinaus, die parallel zu den Druckplatten 28 verlaufen. Aufgrund der vorstehend beschriebenen Anordnung der Stecker 20 und der Kühlmittelleitungen 26 bzw. der Kühlmittelanschlüsse 42, 42' ist eine Verbindung zweier benachbarter Energiespeichermodule 10' vorgesehen, bei der sich jeweils eine von deren Druckplatten 28 gegenüber liegen, wie in Fig. 11 gezeigt ist. Die Ausgestaltung der Druckplatten 28, des Flachzellenstapels 12' und der Zugfedern 30 des Energiespeichermoduls 10' entspricht ansonsten im Wesentlichen den entsprechenden Komponenten des Energiespeichermoduls 10.

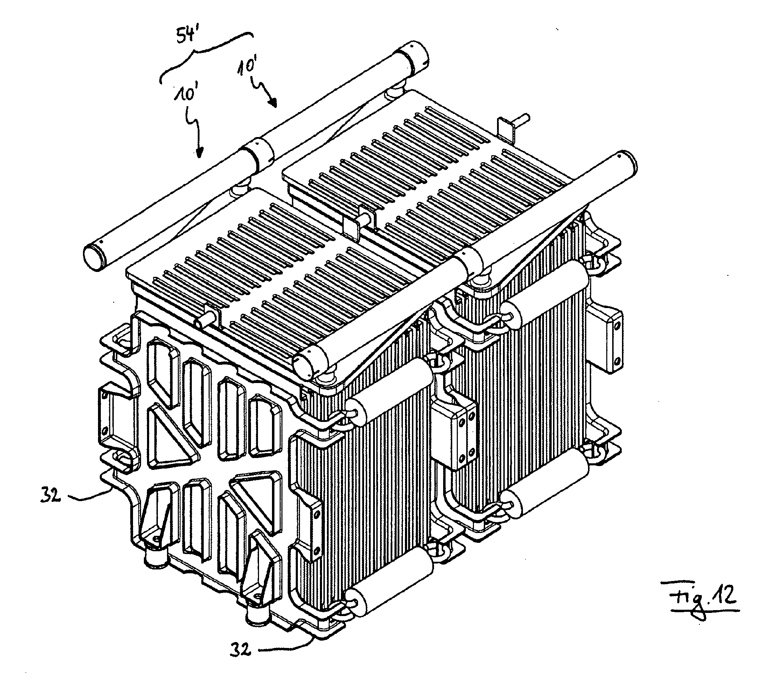

Wie bereits angedeutet, verdeutlicht Fig. 11, auf welche Weise die Energiespeichermodule 10' zusammengefügt werden, um eine Energiespeichereinheit 54' zu bilden. Das Ergebnis ist - aus einer anderen Perspektive - in Fig. 12 gezeigt.

Fig. 12 zeigt, dass auch mit zwei Energiespeichermodulen 10' eine kompakte Energiespeichereinheit 54' geschaffen werden kann. Weitere Energiespeichermodule 10' können aufgrund der anhand des Energiespeichermoduls 10 bereits beschriebenen lagekomplementären Anordnung der Befestigungswinkel 32 ohne weiteres Platz sparend seitlich an die Energiespeichereinheit 54 angefügt werden.

Die Ausgestaltung der Befestigungsflansche 40 erfordert bei der in Fig. 12 dargestellten Energiespeichereinheit 54' eine etwas andere Befestigung als bei der Energiespeichereinheit 54. Diese kann jedoch beispielsweise auf einfache Weise durch ein kleines Plättchen realisiert werden, das mit vier Schrauben an benachbarten Befestigungsflanschen 40 befestigt wird und diese somit zusammenhält. Eine seitlich benachbarte Energiespeichereinheit 54' kann ebenfalls an den Befestigungsflanschen 40 befestigt werden.

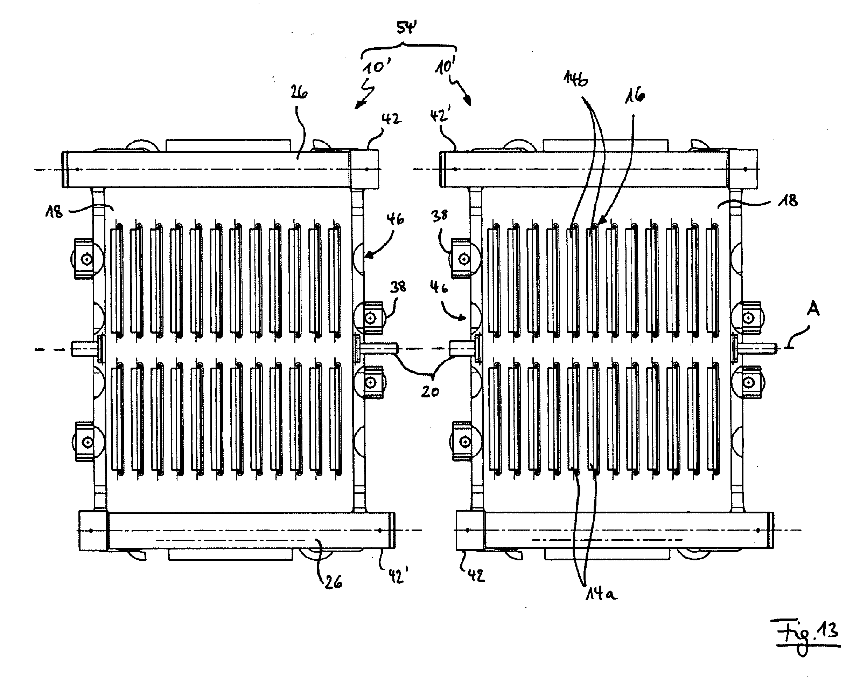

Fig. 13 zeigt nochmals, wie die einander zugewandten Seiten der Energiespeichermodule 10' ausgebildet sind, um eine kompakte und zuverlässige Energiespeichereinheit 54' zu bilden. Die Dämpfungselemente 38 der benachbarten Energiespeichermodule 10' sind lagekomplementär angeordnet. Außerdem sind die Stecker 20 der Verbindungsplatinen 18 in der die Stapelachse A enthaltenden Mittenebene der beiden Flachzellenstapels 12' angeordnet. Die Kühlmittelanschlüsse 42, 42' sind ebenfalls form- und lagekomplementär ausgebildet. Im Gegensatz zu der Situation bei dem Energiespeichermodul 10, ragen die Kühlmittelanschlüsse 42' weiter über den Zellenstapel 12' hinaus als die Kühlmittelanschlüsse 42.

Anhand der Ausrichtung der Elektrodenlaschen 14a, 14b und der Schlitze 16 ist zu erkennen, dass die Zellenstapel 12' der beiden Energiespeichermodule 10' hintereinander angeordnet sind. Mit anderen Worten weisen die beiden Zellenstapel 12' eine gemeinsame Stapelachse A auf.

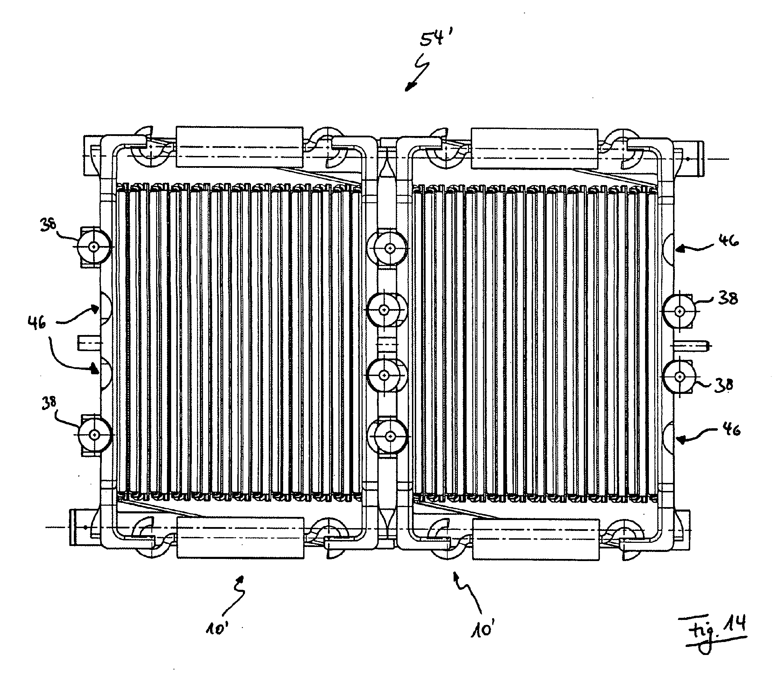

In Fig. 14 ist die Energiespeichereinheit 54' von unten zu sehen. Die Dämpfungselemente 38 des linken Energiespeichermoduls 10' ragen in die ihnen zugeordneten Ausnehmungen 46 des rechten Energiespeichermoduls 10' (siehe auch Fig. 13), und umgekehrt. Die Zugfedern 30 der benachbarten Module 10' liegen in einer parallel zu der Stapelachse A versetzten vertikalen Ebene, die sich senkrecht zur Bildebene erstreckt.

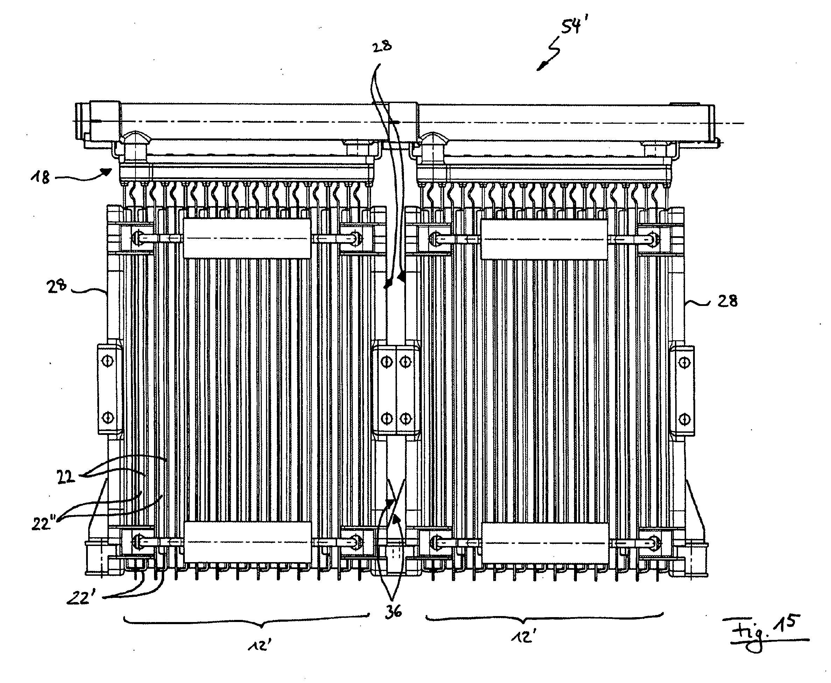

Fig. 15 zeigt die Energiespeichereinheit 54' von der Seite, d. h. in einer Sicht auf eine der Seitenflächen der Flachzellenstapel 12'. Im Gegensatz zu den Kühlelementen 22 des Energiespeichermoduls 10 wiesen die Kühlelemente 22 der Energiespeichermodule 10' keine Sicken 44' auf. Es versteht sich, dass diese bei Bedarf vorgesehen sein können. Außerdem weisen die Kühlelemente 22 jeweils an ihrem unteren, der Verbindungsplatine 18 abgewandten Ende Endabschnitte 22' auf, die sich in einem rechten Winkel zu dem jeweiligen Kühlelement 22 erstrecken. Dadurch können die Flachzellen 12 auch von unten gekühlt werde. Funktionell analoge Seitenabschnitte 22" der Kühlelemente 22 umgreifen Teile der Flachzellen 12 seitlich.

Die Montagewinkel 36 der benachbarten Druckplatten 28 liegen jeweils an der ihr gegenüberliegenden Druckplatte 28 an, um einen korrekten Abstand zwischen den Energiespeichermodulen 10' zu gewährleisten und überdies der Gesamtanordnung mehr Stabilität zu verleihen.

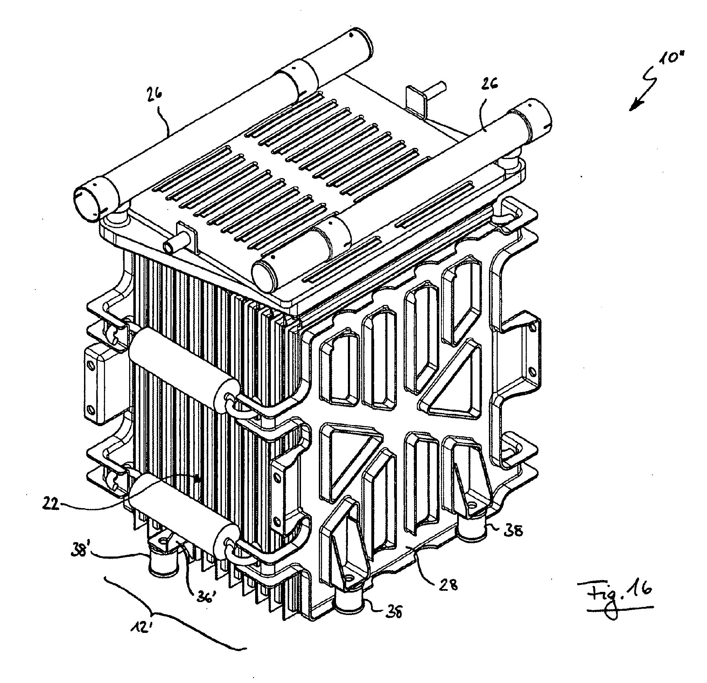

Fig. 16 zeigt eine weitere Ausführungsform 10" des Energiespeichermoduls. Bei dem Energiespeichermodul 10" verlaufen die Kühlmittelleitungen 26 - wie bei dem Energiespeichermodul 10 der Fig. 1 - parallel zu den Flachzellen 12 und den Kühlelementen 22, d.h. senkrecht zur Stapelachse A.

Das Energiespeichermodul 10" weist allerdings neben den Dämpfungselementen 38, die an den Druckplatten 28 befestigt sind, zusätzliche Dämpfungselemente 38' auf, die über Montagewinkel 36' mit einzelnen Kühlelementen 22 verbunden sind. In Fig. 16 ist zu sehen, dass an der sichtbaren linken Seitenfläche des Zellenstapels 12' ein solches Dämpfungselement 38' vorgesehen ist. Das Dämpfungselement 38' dient als weiterer Abstützungspunkt, der zwar nicht primär ein Gewicht des Energiespeichermoduls 10" an einer Auflagefläche abstützen soll. Allerdings dient dieser zusätzliche Abstützungspunkt zu einer Veränderung der Eigenfrequenz des Energiespeichermoduls 10" in einem befestigten Zustand. Ist das Energiespeichermodul 10" beispielsweise in einem Fahrzeug installiert, so kann durch den genannten zusätzlichen Abstützungspunkt die Eigenfrequenz des Moduls 10" derart verändert werden, dass Resonanzereignisse, die störende Geräusche oder sogar Beschädigungen hervorrufen können, reduziert werden. Mit anderen Worten wird durch den zusätzlichen Abstützungspunkt eine Charakteristik der Kopplung zwischen dem Energiespeichermodul 10" und seiner Umgebung verändert. Die Kopplung wird durch eine geeignete Anzahl und/oder Ausgestaltung von zusätzlichen Dämpfungselementen 38' und deren räumliche Verteilung optimiert. Sie kann beispielsweise in Abhängigkeit von der Ausgestaltung und der Größe des Zellstapels 12' und den anderen Komponenten des Energiespeichermoduls 10" modifiziert werden. Auch die Frequenzcharakteristik und Ausgestaltung der Auflagefläche/Montagefläche spielt dabei eine Rolle.

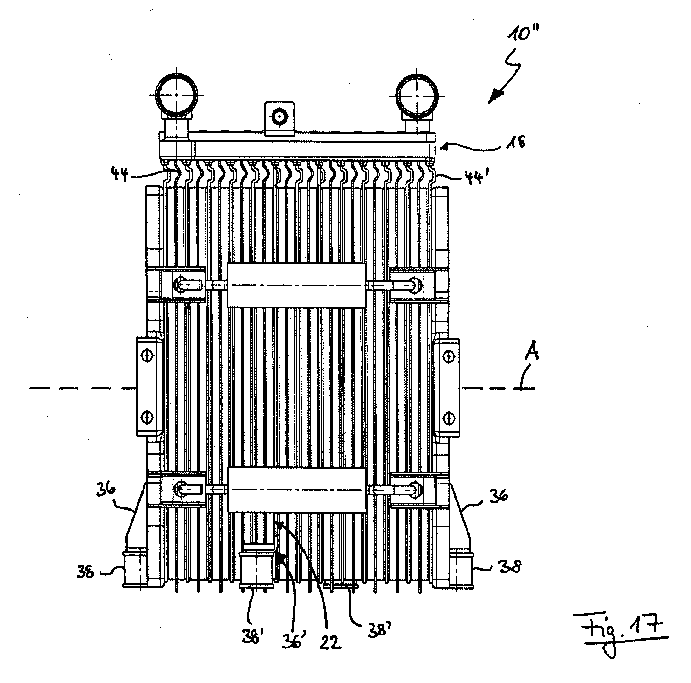

Bei dem Energiespeichermodul 10" ist - wie in Fig. 17 zu erkennen ist - an beiden Seitenflächen des Zellenstapels 12' ein Dämpfungselement 38' vorgesehen. Diese sind an unterschiedlichen Kühlelementen 22 angebracht, so dass die Dämpfungselemente 38' in einer unterschiedlichen "Höhe" des Zellenstapels 12' ihre Wirkung entfalten.

Die Montagewinkel 36' der Kühlelemente 22 ragen seitlich aus den Zellenstapel 12' heraus, so dass im Bereich des Zellenstapels 12' keine entsprechenden Ausnehmungen vorgesehen sein müssen, um die Dämpfungselemente 38' aufzunehmen. Der Zellenstapel 12' entspricht somit im Wesentlichen den Zellenstapeln 12' der Energiespeichermodule 10, 10'. Die Montagewinkel 36' mit den daran befestigten Dämpfungselementen 38' bilden somit lediglich zusätzliche "seitliche Fortsätze" der entsprechenden Kühlelemente 22. Diese Fortsätze können auch separate Bauteile sein, die lösbar/nachträglich mit bestimmten Kühlelementen 22 verbunden werden, beispielsweise um die Kopplung der Energiespeichereinheit 10 mit der Auflagefläche zu justieren.

Wie die Dämpfungselemente 38 sind auch die Dämpfungselemente 38' hauptsächlich dafür vorgesehen, um Schwingungen von unten zu dämpfen, d. h. um Schwingungen parallel zu ihrer Längsachse (Zylinderachse) zu dämpfen bzw. teilweise zu absorbieren. Dies schließt nicht aus, dass auch in einem gewissen Umfang Schwingungen senkrecht dazu gedämpft werden. Die Dämpfungselemente 38, 38' sind im Wesentlichen baugleich. Für bestimmte Anwendungen können allerdings auch unterschiedlich ausgestaltete Dämpfungselemente 38, 38', insbesondere was ihre Abmessungen und elastischen Eigenschaften betrifft, vorgesehen sein.

Fig. 17 zeigt das Energiespeichermodul 10" in einer Ansicht von der Seite, wodurch auch das in Fig. 16 nicht sichtbare Dämpfungselement 38' an der hinteren Seitenfläche des Zellenstapels 12' zumindest ansatzweise zu erkennen ist. Bei dem Energiespeichermodul 10" sind die Kühlelemente 22 wie auch die Elektrodenlaschen 14a, 14b mit Sicken 44' bzw. 44 versehen, um insbesondere vertikale Abstandsänderungen zwischen der Verbindungsplatine 18 und dem Zellenstapel 12' zu kompensieren.

Es versteht sich, dass verschiedene Aspekte und Details, die lediglich anhand einer der Ausführungsformen 10, 10', 10" des Energiespeichermoduls bzw. einer der Ausführungsformen 54, 54' der Energiespeichereinheit beschrieben wurden, beliebig mit den jeweils anderen Ausführungsformen kombinierbar ist, um ein an die jeweils vorliegenden Anforderungen angepasstes Produkt zu schaffen.

Die Modularität der Energiespeichermodule 10, 10', 10" ermöglicht eine schnelle und kostengünstige Anpassung einer Energiespeichereinheit an die jeweils vorliegenden Anforderungen. Sie wird zum einen durch die äußere Formgebung der Module 10, 10', 10" erreicht, zum anderen durch die vereinheitlichte/komplementäre Lage der Anschlüsse 20, 42, 42', 40 und durch deren formkomplementäre Ausgestaltung.

### Bezugszeichenliste

| | |
|---|---|
| 10, 10', 10" | Energiespeichermodul |
| 12 | Flachzelle |
| 12' | Zellenstapel |
| 14a, 14b | Elektrodenlasche |
| 16 | Schlitz |
| 18 | Verbindungsplatine |
| 20 | Stecker |
| 22 | Kühlelement |
| 22' | Endabschnitt |
| 22" | Seitenabschnitt |
| 23 | Kühlkörper |
| 24 | Anschlussstutzen |
| 26 | Kühlmittelleitung |
| 28 | Druckplatte |
| 30 | Zugfeder |
| 32 | Befestigungswinkel |
| 32' | Abschnitt |
| 34 | Rippe |
| 36, 36' | Montagewinkel |
| 38, 38' | Dämpfungselement |
| 40 | Befestigungsflansch |
| 42, 42' | Kühlmittelanschluss |
| 44, 44', 44" | Sicke |
| 46 | Ausnehmung |
| 48 | Schottblech |
| 50 | Abwinklung |
| 52 | Winkelabschnitt |
| 54, 54' | Energiespeichereinheit |
| A | Stapelachse |

## Patentansprüche

1. Energiespeichermodul, das mehrere in einem Stapel angeordnete Flachzellen (12) und Anschlusseinrichtungen (20, 40, 42, 42') aufweist, die derart ausgebildet sind, dass das Energiespeichermodul mechanisch, elektrisch und/ oder zum Austausch von Kühlmittel mit zumindest einem weiteren gleichartigen Energiespeichermodul verbindbar ist, **dadurch gekennzeichnet, dass** der Flachzellenstapel (12) mittels zumindest eines elastischen Elements (30) zusammengehalten wird.

2. Energiespeichermodul nach Anspruch 1, **dadurch gekennzeichnet, dass** das Energiespeichermodul an einer ersten Stirnseite eine erste mechanische, elektrische und/ oder Kühlmittel-Anschlusseinrichtung (20, 40, 42, 42') aufweist, wobei das Energiespeichermodul an einer der ersten Stirnseite gegenüberliegenden zweiten Stirnseite eine zweite mechanische, elektrische bzw. Kühlmittel-Anschlusseinrichtung (20, 40, 42, 42') aufweist, und wobei die erste Anschlusseinrichtung (20, 40, 42, 42') und die zweite Anschlusseinrichtung (20, 40, 42, 42') lagesymmetrisch zueinander angeordnet und formkomplementär zueinander ausgebildet sind.

3. Energiespeichermodul nach Anspruch 1 oder 2, **dadurch gekennzeichnet, dass** der Flachzellenstapel (12) durch eine Fixierungsanordnung (28, 30) zusammengehalten wird, die zwei Druckplatten (28) aufweist, die gegenüberliegenden Stirnseiten des Flachzellenstapels (12') zugeordnet sind und die mittels zumindest dem einen elastischen Element (30) miteinander verbunden sind.

4. Energiespeichermodul nach Anspruch 3,
**dadurch gekennzeichnet, dass**
die Druckplatten (28) jeweils zumindest einen Befestigungsflansch (40) aufweisen, mit dem das Energiespeichermodul an einem weiteren gleichartigen Energiespeichermodul befestigbar ist.

5. Energiespeichermodul nach Anspruch 3 oder 4,
**dadurch gekennzeichnet, dass**
zumindest ein erstes elastisches Element (30) sich entlang einer ersten Längsseite des Flachzellenstapels (12') zwischen den zwei Druckplatten (28) erstreckt, wobei zumindest ein zweites elastisches Element (30) sich entlang einer zweiten Längsseite des Flachzellenstapels (12') zwischen den zwei Druckplatten (28) erstreckt, wobei das erste elastische Element (30) und das zweite elastische Element (30) lagekomplementär zueinander angeordnet sind, insbesondere auf unterschiedlicher Höhe.

6. Energiespeichermodul nach Anspruch 5,
**dadurch gekennzeichnet, dass**
die Druckplatten (28) an zwei gegenüberliegenden Seiten angeordnete Befestigungssegmente (32, 32') zur Befestigung der elastischen Elemente (30) aufweist, die in der Ebene der jeweiligen Druckplatte (28) über die Druckplatte (28) und über den Flachzellenstapel (12') hinausragen, wobei die Befestigungssegmente (32, 32') lagekomplementär zueinander angeordnet sind.

7. Energiespeichermodul nach zumindest einem der vorhergehenden Ansprüche,
**dadurch gekennzeichnet, dass**
zumindest ein Teil der Anschlusseinrichtungen (20, 40, 42, 42') Steckverbindungen sind, die insbesondere lösbar sind.

8. Energiespeichermodul nach zumindest einem der vorhergehenden Ansprüche,
**dadurch gekennzeichnet, dass**
das Energiespeichermodul eine Verbindungseinheit (18) aufweist, die die Flachzellen (12) zumindest elektrisch miteinander verbindet und die insbesondere als Platte ausgebildet ist, die sich in einer Ebene senkrecht zu der jeweiligen Erstreckungsebene der Flachzellen (12) erstreckt.

9. Energiespeichermodul nach Anspruch 8,
**dadurch gekennzeichnet, dass**
an der Verbindungseinheit (18) elektrische Anschlusseinrichtungen (20) angeordnet sind, die als Stecker bzw. Buchse ausgebildet sind.

10. Energiespeichermodul nach zumindest einem der vorhergehenden Ansprüche,
**dadurch gekennzeichnet, dass**
das Energiespeichermodul zumindest einen Kühlmittelkanal (26) aufweist, der an einer ersten Stirnseite des Energiespeichermoduls in einen Kühlmitteleinlass (42, 42') mündet und an einer zweiten Stirnseite des Energiespeichermoduls in einen Kühlmittelauslass (42' bzw. 42) mündet.

11. Energiespeichermodul nach Anspruch 10,
**dadurch gekennzeichnet, dass**
der Kühlmittelkanal (26) senkrecht oder parallel zu den Flachzellen (12) verläuft.

12. Energiespeichermodul nach zumindest einem der vorhergehenden Ansprüche,
**dadurch gekennzeichnet, dass**
zwischen den Flachzellen (12) Kühlelemente (22) angeordnet sind.

13. Energiespeichereinheit mit zumindest zwei Energiespeichermodulen (10, 10', 10") gemäß zumindest einem der vorhergehenden Ansprüche.

14. Energiespeichereinheit nach Anspruch 13,
**dadurch gekennzeichnet, dass**
die Energiespeichermodule (10, 10', 10") in einer zweidimensionalen oder dreidimensionalen Matrix angeordnet sind.

15. Energiespeichereinheit nach Anspruch 13 oder 14,
**dadurch gekennzeichnet, dass**
zumindest eine Adaptereinrichtung vorgesehen ist, um zumindest zwei Energiespeichermodule (10, 10', 10") miteinander zu verbinden.

16. Energiespeichereinheit nach zumindest einem der Ansprüche 13 bis 15,
**dadurch gekennzeichnet, dass**
die Flachzellenstapel (12) von in einer Reihe angeordneter und miteinander funktionell gekoppelter Energiespeichermodule (10, 10', 10") hintereinander angeordnet sind.

17. Energiespeichereinheit nach zumindest einem der vorhergehenden Ansprüche,
**dadurch gekennzeichnet, dass**
die Flachzellenstapel (12') von in einer Reihe angeordneter und miteinander funktionell gekoppelter Energiespeichermodule (10, 10', 10") nebeneinander angeordnet sind.

18. Energiespeichereinheit mit zumindest zwei Energiespeichermodulen (10, 10', 10") gemäß zumindest einem der Ansprüche 3 bis 6, wobei die Druckplatten (28) der beiden Energiespeichermodule (10, 10', 10") mechanisch miteinander gekoppelt sind.

## Claims

1. Energy storage module, which has a number of flat cells (12) arranged in a stack and a number of connection devices (20, 40, 42, 42'), which are formed in such a way that the energy storage module can be connected mechanically, electrically and/or for the exchange of coolant to at least one further energy storage module of the same kind, **characterized in that** the stack of flat cells (12) is held together by means of at least one elastic element (30).

2. Energy storage module according to Claim 1, **characterized in that** the energy storage module has at a first end face a first mechanical, electrical and/or coolant connection device (20, 40, 42, 42'), the energy storage module having at a second end face, opposite from the first end face, a second mechanical, electrical or coolant connection device (20, 40, 42, 42'), and the first connection device (20, 40, 42, 42') and the second connection device (20, 40, 42, 42') being arranged symmetrically in terms of their position in relation to one another and being formed complementarily in terms of their shape in relation to one another.

3. Energy storage module according to Claim 1 or 2, **characterized in that** the stack of flat cells (12) is held together by a fixing arrangement (28, 30), which has two pressure plates (28), which are assigned to opposite end faces of the stack of flat cells (12') and which are connected to one another by means of at least the one elastic element (30).

4. Energy storage module according to Claim 3, **characterized in that** the pressure plates (28) respectively have at least one fastening flange (40), with which the energy storage module can be fastened to a further energy storage module of the same kind.

5. Energy storage module according to Claim 3 or 4, **characterized in that** at least a first elastic element (30) extends along a first longitudinal side of the stack of flat cells (12') between the two pressure plates (28), at least a second elastic element (30) extends along a second longitudinal side of the stack of flat cells (12') between the two pressure plates (28), the first elastic element (30) and the second elastic element (30) being arranged complementarily in terms of their position in relation to one another, in particular at different heights.

6. Energy storage module according to Claim 5, **characterized in that**, for fastening the elastic elements (30), the pressure plates (28) have fastening segments (32; 32') that are arranged on two opposite sides and, in the plane of the respective pressure plate (28), protrude beyond the pressure plate (28) and beyond the stack of flat cells (12'), the fastening segments (32, 32') being arranged complementarily in terms of their position in relation to one another.

7. Energy storage module according to at least one of the preceding claims, **characterized in that** at least some of the connection devices (20, 40, 42, 42') are plug-in connections, which are in particular releasable.

8. Energy storage module according to at least one of the preceding claims, **characterized in that** the energy storage module has a connecting unit (18), which at least electrically connects the flat cells (12) to one another and which is formed in particular as a plate that extends in a plane perpendicular to the respective plane of extent of the flat cells (12).

9. Energy storage module according to Claim 8, **characterized in that** electrical connection devices (20), which are formed as plugs or sockets, are arranged on the connecting unit (18).

10. Energy storage module according to at least one of the preceding claims, **characterized in that** the energy storage module has at least one coolant channel (26), which at a first end face of the energy storage module opens out into a coolant inlet (42, 42') and at a second end face of the energy storage module opens out into a coolant outlet (42' or 42).

11. Energy storage module according to Claim 10, **characterized in that** the coolant channel (26) runs perpendicularly or parallel to the flat cells (12).

12. Energy storage module according to at least one of the preceding claims, **characterized in that** cooling elements (22) are arranged between the flat cells (12).

13. Energy storage unit comprising at least two energy storage modules (10, 10', 10'') according to at least one of the preceding claims.

14. Energy storage unit according to Claim 13, **characterized in that** the energy storage modules (10, 10', 10'') are arranged in a two-dimensional or three-dimensional matrix.

15. Energy storage unit according to Claim 13 or 14, **characterized in that** at least one adapter device is provided for connecting at least two energy storage modules (10, 10', 10'') to one another.

16. Energy storage unit according to at least one of Claims 13 to 15, **characterized in that** the stacks of flat cells (12) of energy storage modules (10, 10', 10'') arranged in a row and functionally coupled to one another are arranged one behind the other.

17. Energy storage unit according to at least one of the preceding claims, **characterized in that** the stacks of flat cells (12') of energy storage modules (10, 10', 10'') arranged in a row and functionally coupled to one another are arranged one next to the other.

18. Energy storage unit comprising at least two energy storage modules (10, 10', 10'') according to at least one of Claims 3 to 6, the pressure plates (28) of the two energy storage modules (10, 10', 10") being mechanically coupled to one another.

## Revendications

1. Module de stockage d'énergie, comportant plusieurs cellules plates (12) et dispositifs de raccordement (20, 40, 42, 42') disposés dans une pile réalisés de telle sorte que le module de stockage d'énergie peut être relié sur le plan mécanique, électrique et/ou sur le plan de l'échange de moyen de refroidissement avec au moins un module de stockage d'énergie de même type supplémentaire, **caractérisé en ce que** la pile de cellules plates (12) est maintenue à l'aide d'au moins un élément élastique (30).

2. Module de stockage d'énergie selon la revendication 1, **caractérisé en ce que** le module de stockage d'énergie comporte, au niveau d'un premier côté avant, un premier dispositif de raccordement mécanique, électrique et/ou de moyen de refroidissement (20, 40, 42, 42'), le module de stockage d'énergie comportant, au niveau d'un deuxième côté avant opposé au premier côté avant, un deuxième dispositif de raccordement mécanique, électrique et/ou de moyen de refroidissement (20, 40, 42, 42') et le premier dispositif de raccordement (20, 40, 42, 42') et le deuxième dispositif de raccordement (20, 40, 42, 42') étant disposés dans des positions symétriques l'une par rapport à l'autre et étant réalisés par complémentarité de formes l'un par rapport à l'autre.

3. Module de stockage d'énergie selon la revendication 1 ou 2, **caractérisé en ce que** la pile de cellules plates (12) est maintenue grâce à un agencement de fixation (28, 30) comportant deux plaques de pression (28) associées aux côtés opposés avant de la pile de cellules plates (12') et reliées entre elles à l'aide du premier élément élastique (30) au moins.

4. Module de stockage d'énergie selon la revendication 3, **caractérisé en ce que** les plaques de pression (28) comportent respectivement au moins une bride de fixation (40) à l'aide de laquelle le module de stockage d'énergie peut être fixé à un autre module de stockage d'énergie de même type.

5. Module de stockage d'énergie selon la revendication 3 ou 4, **caractérisé en ce qu'**au moins un premier élément élastique (30) s'étend le long d'un premier côté longitudinal de la pile de cellules plates (12'), entre les deux plaques de pression (28), au moins un deuxième élément élastique (30) s'étendant le long d'un deuxième côté longitudinal de la pile de cellules plates (12'), entre les deux plaques de pression (28), le premier élément élastique (30) et le deuxième élément élastique (30) étant disposés de façon à présenter des positions complémentaires l'une par rapport à l'autre, notamment à une hauteur différente.

6. Module de stockage d'énergie selon la revendication 5, **caractérisé en ce que** les plaques de pression (28) comportent des segments de fixation (32, 32') disposés au niveau de deux côtés opposés pour fixer les éléments élastiques (30) ressortant vers l'extérieur dans le plan de la plaque de pression (28) respective par-delà la plaque de pression (28) et par-delà la pile de cellules plates (12'), les segments de fixation (32, 32') étant disposés de façon à présenter des positions complémentaires l'une par rapport à l'autre.

7. Module de stockage d'énergie selon au moins l'une quelconque des revendications précédentes, **caractérisé en ce qu'**au moins une partie des dispositifs de raccordement (20, 40, 42, 42') sont des liaisons enfichables, notamment amovibles.

8. Module de stockage d'énergie selon au moins l'une quelconque des revendications précédentes, **caractérisé en ce que** le module de stockage d'énergie comporte une unité de liaison (18) reliant entre elles les cellules plates (12) au moins sur le plan électrique et prenant notamment la forme d'une plaque s'étendant dans un plan perpendiculaire au plan d'extension respectif des cellules plates (12).

9. Module de stockage d'énergie selon la revendication 8, **caractérisé en ce que** des dispositifs de raccordement électrique (20) sont disposés au niveau de l'unité de liaison (18), ledit dispositif prenant la forme d'une fiche mâle et/ou d'une douille.

10. Module de stockage d'énergie selon au moins l'une quelconque des revendications précédentes, **caractérisé en ce que** le module de stockage d'énergie comporte au moins un canal de moyen de refroidissement (26) débouchant au niveau d'un premier côté avant du module de stockage d'énergie dans un orifice d'admission de moyen de refroidissement (42, 42') et débouchant au niveau d'un deuxième côté avant du module de stockage d'énergie dans un orifice de sortie de moyen de refroidissement (42' et/ou 42).

11. Module de stockage d'énergie selon la revendication 10, **caractérisé en ce que** le canal de moyen de refroidissement (26) s'étend perpendiculairement ou parallèlement aux cellules plates (12).

12. Module de stockage d'énergie selon au moins l'une quelconque des revendications précédentes, **caractérisé en ce que** des éléments de refroidissement (22) sont disposés entre les cellules plates (12).

13. Unité de stockage d'énergie pourvue d'au moins deux modules de stockage d'énergie (10, 10', 10") selon au moins l'une quelconque des revendications précédentes.

14. Unité de stockage d'énergie selon la revendication 13, **caractérisée en ce que** les modules de stockage d'énergie (10, 10', 10") sont disposés dans une matrice bidimensionnelle ou tridimensionnelle.

15. Unité de stockage d'énergie selon la revendication 13 ou 14, **caractérisée en ce qu'**au moins un dispositif d'adaptateur est prévu afin de relier entre eux au moins deux modules de stockage d'énergie (10, 10', 10").

16. Unité de stockage d'énergie selon au moins l'une quelconque des revendications 13 à 15, **caractérisée en ce que** les piles de cellules plates (12) de modules de stockage d'énergie (10, 10', 10") disposés en ligne et couplés les uns avec les autres sur le plan fonctionnel sont disposées les unes derrière les autres.

17. Unité de stockage d'énergie selon au moins l'une quelconque des revendications précédentes, **caractérisée en ce que** les piles de cellules plates (12') de modules de stockage d'énergie (10, 10', 10") disposés en ligne et couplés les uns avec les autres sur le plan fonctionnel sont disposées côte à côte.

18. Unité de stockage d'énergie pourvue d'au moins deux modules de stockage d'énergie (10, 10', 10") selon au moins l'une quelconque des revendications 3 à 6, les plaques de pression (28) des deux modules de stockage d'énergie (10, 10', 10") étant couplées entre elles sur le plan mécanique.
